# EUROPÄISCHE PATENTSCHRIFT

(11) **EP 3 446 086 B1**
(45) Veröffentlichungstag und Bekanntmachung des Hinweises auf die Patenterteilung: **21.06.2023**
(21) Anmeldenummer: 17720705.7
(22) Anmeldetag: 19.04.2017
(51) Int. Cl.: G01K 13/02, G01K 1/143, G01K 1/20, G01K 7/42, G01K 15/00

(54) **TEMPERATURBESTIMMUNGSEINRICHTUNG UND VERFAHREN ZU DEREN KALIBRIERUNG UND ZUR BESTIMMUNG EINER MEDIUMSTEMPERATUR**
TEMPERATURE-DETERMINING DEVICE AND METHOD FOR CALIBRATING SAME AND FOR DETERMINING A MEDIUM TEMPERATURE
DISPOSITIF DE DÉTERMINATION DE TEMPÉRATURE ET PROCÉDÉ D'ÉTALONNAGE DE CELUI-CI ET DE DÉTERMINATION DE LA TEMPÉRATURE D'UN MILIEU

(30) Priorität: 20.04.2016 DE 102016107335
(43) Veröffentlichungstag der Anmeldung: 27.02.2019
(73) Patentinhaber: ABB Schweiz AG, 5400 Baden (CH)
(72) Erfinder: MERLIN, Tilo, 63589 Linsengericht (DE)
(74) Vertreter: Maiwald GmbH
(86) Internationale Anmeldenummer: PCT/EP2017/059232
(87) Internationale Veröffentlichungsnummer: WO 2017/182491

(56) Entgegenhaltungen:
- WO-A1-2009/051588
- DD-A1- 87 677
- DE-A1- 19 800 753
- GB-A- 2 500 034
- JP-A- H07 198 503

## Beschreibung

Die Erfindung betrifft eine Temperaturbestimmungseinrichtung zur Bestimmung einer Mediumstemperatur über die Temperatur einer das Medium umschließenden Oberfläche, umfassend einen in der Umgebung der Oberfläche angeordneten Umgebungstemperatursensor, zur Messung einer Umgebungstemperatur, und einen auf der Oberfläche aufliegenden Oberflächentemperatursensor, zur Messung einer zwischen der Mediumstemperatur und der Umgebungstemperatur liegenden Mischtemperatur. Des Weiteren betrifft die Erfindung ein Verfahren zur Kalibrierung der Temperaturbestimmungseinrichtung sowie ein Verfahren zur Bestimmung einer Mediumstemperatur.

Das Einsatzgebiet der Erfindung erstreckt sich auf Temperaturbestimmungseinrichtungen, bei denen ein Oberflächentemperatursensor auf einer Oberfläche aufliegt, um die Temperatur eines darunter bzw. dahinter liegenden Mediums zu bestimmen. Idealerweise sollte ein solcher Sensor die Temperatur des Mediums annehmen, welches von der Oberfläche umschlossen wird. Ist der Temperatursensor beispielsweise als elektrisches Thermoelement ausgebildet, so kann durch Messung der Thermospannung auf die Temperatur des Sensors und somit auf die Temperatur des Mediums geschlossen werden, sofern sich beide im thermischen Gleichgewicht befinden, also die gleiche Temperatur aufweisen.

Nachteilhaft aus dieser, aus dem allgemein bekannten Stand der Technik bekannten, Vorgehensweise ist, dass der Oberflächentemperatursensor thermisch nicht nur mit der Oberfläche sondern auch mit seiner Umgebung, beispielsweise der umgebenden Luft, wechselwirkt. Aufgrund dessen misst der Oberflächentemperatursensor in der Praxis weder die Temperatur des Mediums, noch der Oberfläche, sondern eine Mischtemperatur, die zwischen der Temperatur des Mediums und der Umgebungstemperatur liegt.

Aus der DD 87 677 B1 ist eine Temperaturbestimmungseinrichtung zur Bestimmung der Temperatur von flüssigen und zähflüssigen Massen bekannt, welche neben einem Sensor in der Spitze eines in das Medium eintauchenden stabförmigen Temperaturfühlers einen zweiten Sensor im Schaft des Fühlers umfasst. Die Einrichtung weist eine Recheneinheit mit darauf elektronisch hinterlegter Naherungsformel zur Errechnung einer Mediumstemperaturnäherung auf, wobei die Näherungsformel als Summe aus der Mischtemperatur und einem Produkt aus zwei Faktoren, der eine Faktor sich aus der Differenz von der Mischtemperatur und der Umgebungstemperatur ergebend und der zweite Faktor ein Kalibrierungsfaktor darstellend, hinterlegt ist.

GB 2 500 034 A offenbart ein Verfahren zur Ermittlung der Oberflächentemperatur eines Objekts durch eine Isolierschicht, mit der das Objekt eingekleidet ist, hindurch. Um eine Näherung für die tatsächliche Oberflächentemperatur des Objekts zu ermitteln, werden mit zwei verschiedenen Sensoren gemessene Temperaturen herangezogen. Der erste Sensor steht in Kontakt mit der äußeren Oberfläche der Isolierschicht und ist ansonsten von weiterem Isoliermaterial umgeben. Der zweite Sensor steht in Kontakt mit der Umgebung und ist durch das weitere Isoliermaterial von dem ersten Sensor und der äußeren Oberfläche der Isolierschicht beabstandet.

WO 2009/051 588 A1 offenbart ein Verfahren, mit dem der Einfluss der Umgebungstemperatur auf die Messung der Temperatur einer Außenseite eines Rohrs mit einem ersten Sensor korrigiert werden kann, indem eine zusätzliche Messung der Umgebungstemperatur mit einem abgesetzten Sensor zur Berechnung eines Näherungswerts der wahren Temperatur an der Außenseite des Rohrs herangezogen wird.

DE 198 00 753 A1 offenbart eine weitere Messvorrichtung für nicht-invasive Temperaturmessung eines Fluids, das in einem Rohr strömt. Die Messvorrichtung umfasst zwei Sensoren. Der erste Sensor steht mit der Außenwand des Rohrs in Kontakt, und der zweite Sensor ist von dem ersten Sensor durch eine Wärme-Barriere beabstandet.

Es ist die Aufgabe der vorliegenden Erfindung, das Verfahren auf eine nicht-invasive Messung einer Mediumstemperatur durch eine das Medium umgebende Gehäusewand, eine Temperaturbestimmungseinrichtung sowie Verfahren zur Kalibrierung und zum Betrieb derselben zu schaffen, bei denen ein systematischer Messfehler, der durch den Einfluss der Umgebungstemperatur eingeführt wird, möglichst einfach vermieden wird.

Die Aufgabe wird ausgehend von einer Temperaturbestimmungseinrichtung gemäß Anspruch 1 gelöst. Mit der Erfindung zusammenhängende Verfahren werden in den Ansprüchen 2 und 3 vorgestellt. Vorteilhafte Ausgestaltungen der Erfindung sind jeweils in rückbezogenen Ansprüchen angegeben.

Die Erfindung schließt die technische Lehre ein, dass eine Temperaturbestimmungseinrichtung neben einem Oberflächentemperatursensor auch einen Umgebungstemperatursensor umfasst, welcher die Umgebungstemperatur des die Oberfläche umgebenden Mediums, beispielsweise Luft, misst, wobei eine Recheneinheit vorgesehen ist, welche über eine darauf elektronisch hinterlegte Näherungsformel verfügt, wobei diese Näherungsformel einen Näherungswert der Mediumstemperatur liefert und als Summe aus der durch den Oberflächentemperatursensor gemessenen Mischtemperatur und einem Produkt aus zwei Faktoren hinterlegt ist, wobei der erste Faktor sich aus der Differenz von der Mischtemperatur und der Umgebungstemperatur ergibt und der zweite Faktor sich aus einem Verhältnis eines Dividenden zu einem Quotienten ergibt, wobei der Dividend sich als Differenz von einer zuvor hinterlegten Kalibrierungsmedientemperatur und einer ebenfalls zuvor hinterlegten Kalibrierungsmischtemperatur ergibt, und der Divisor sich aus der Differenz von der Kalibrierungsmischtemperatur und einer zuvor hinterlegten Kalibrierungsumgebungstemperatur ergibt.

Der Kerngedanke dieser technischen Lösung baut darauf auf, dass die Mischtemperatur, die der Oberflächentemperatursensor misst und liefert, der durch die Umgebungstemperatur verfälschten Mediumstemperatur entspricht. In einer ersten Näherung, angelehnt beispielsweise an die erste Ordnung einer Taylor-Entwicklung, ist die Verfälschung beziehungsweise die Abweichung der eigentlichen Mediumstemperatur durch die Umgebungstemperatur linear. Erfindungsgemäß ist auf der Recheneinheit eine diesen linearen Zusammenhang charakterisierende Temperaturenkonstellation hinterlegt, bestehend aus den drei miteinander thermisch verknüpften Temperaturen in Form einer Kalibrierungsmischtemperatur, einer Kalibrierungsumgebungstemperatur, und einer Kalibrierungsmediumstemperatur. Diese Temperaturen können beispielsweise während eines Kalibrierungsvorgangs aufgenommen werden oder durch numerische Simulationen unter Zuhilfenahme von bekannten Prozessparametern und/oder bekannten Materialeigenschaften errechnet werden. Der Einfluss der Umgebungstemperatur auf die Mischtemperatur des Oberflächentemperatursensors hängt dabei unter anderem von der Existenz und der Form und beispielsweise der Wärmekapazität eines Gehäuses des Oberflächensensors ab sowie der Ausgestaltung der das Medium umschließenden Oberfläche (Material, Wandstärke, etc.) und des Mediums selbst.

Die erfindungsgemäße vorgesehene elektronisch hinterlegte Näherungsformel ist derart gestaltet, dass die folgenden, wesentlichen Kriterien erfüllt sind:
Ein erstes Kriterium sieht vor, dass, wenn die Mischtemperatur der Umgebungstemperatur entspricht, der zu errechnendeMediumstemperaturnäherungswert genau der gemessenen Umgebungstemperatur entspricht. Würde nämlich hingegen die Mediumstemperatur von der Umgebungstemperatur abweichen, so würde sich als Mischtemperatur ein Wert zwischen diesen beiden Temperaturen bilden, und nicht einer, der exakt der Umgebungstemperatur entspricht.

Ein zweites Kriterium sieht vor, dass, wenn gleichzeitig die gemessene Mischtemperatur genau der Kalibrierungsmischtemperatur entspricht und die gemessene Umgebungstemperatur genau der Kalibrierungsumgebungstemperatur entspricht, die zu errechnende Mediumstemperaturnäherung auch genau der Kalibrierungsmediumstemperatur entsprechen muss. Dies wird entsprechend der Definition der Näherungsformel derart gelöst, dass sich in diesem Fall alle Teile der Gleichung bis auf die Kalibrierungsmediumstemperatur wegkürzen beziehungsweise wegsubtrahieren.

Als letzteres Kriterium ist die Gleichung linear gestaltet, beschreibt also einen linearen Zusammenhang zwischen der Abweichung der Mischtemperatur von der Mediumstemperatur und der Differenz zwischen Mischtemperatur und Umgebungstemperatur. Vorteilhaft hieran ist eine besonders einfache Modellierung eines thermisch relativ komplexen Systems, die in der Praxis sehr genaue Vorhersagen über die Mediumstemperatur anhand der gemessenen Mischtemperatur und Umgebungstemperatur liefert. Der Proportionalitätsfaktor, der die lineare Gleichung charakterisiert, ist dabei von den thermischen Eigenschaften der verwendeten Materialen und der Art von deren Zusammenbringung abhängig und kann beispielsweise durch Kalbrierung bestimmt werden oder - im Falle von hinreichend bekannten Eigenschaften - durch Simulation.

Infolgedessen dient diese Näherungsformel also dazu, zwischen zwei bekannten Zuständen linear zu interpolieren beziehungsweise außerhalb davon linear zu extrapolieren, wobei der erste Zustand derjenige ist, in dem die Mischtemperatur zwischen der Umgebungstemperatur und der Kalibrierungsmischtemperatur liegt und der zweite Zustand derjenige ist, bei dem die Mischtemperatur kleiner als die Umgebungstemperatur ist oder größer als die Kalibrierungsmischtemperatur.

Die beanspruchte Erfindung sieht vor, dass die Näherungsformel hinterlegt ist als TMEDN = TM + (TM - TU) * ((TOKAL - TMKAL) / (TMKAL - TUKAL)) mit der Mediumstemperaturnäherung TMEDN, der Mischtemperatur TM, der Umgebungstemperatur TU, der Kalibrierungsmediumstemperatur TMEDKAL, der Kalibrierungsmischtemperatur TMKAL und der Kalibrierungsumgebungstemperatur TUKAL. Die drei oben genannten Kriterien sind durch diese Gleichung jeweils erfüllt. Gemäß einem die Erfindung betreffenden Verfahren wird die Temperatur eines Mediums dadurch bestimmt, dass eine Mischtemperatur zwischen der Mediumstemperatur und einer Umgebungstemperatur gemessen wird, und zusätzlich die Umgebungstemperatur gemessen wird, und im Anschluss ein Näherungswert für die Mediumstemperatur errechnet wird, wobei die Näherungsformel zur Errechnung dieses Näherungswertes auf einem zuvor beschriebenen linearen Zusammenhang beruht und einer Kalibrierungsumgebungstemperatur des Umgebungstemperatursensors, einer Kalibrierungsmediumstemperatur, und einer Kalibrierungsmischtemperatur des Oberflächensensors zugrundeliegt. Vorteilhafterweise ist die Näherungsformel dabei wie zuvor dargelegt hinterlegt.

Zur Kalibrierung einer Temperaturbestimmungseinrichtung wird erfindungsgemäß ein Verfahren vorgeschlagen, bei dem in einem Kalibrierungsszenario, in dem sich die Mediumstemperatur von der Umgebungstemperatur unterscheidet, eine Kalibrierungsmischtemperatur durch den Oberflächensensor aufgenommen wird. Der Betrag dieser Kalibrierungsmischtemperatur ist dann abhängig von der Existenz, Form, und beispielsweise der Wärmekapazität von dem Gehäuse des Oberflächensensors und sonstigen thermisch relevanten Aspekten. In zwei weiteren Schritten wird eine Kalibrierungsmischtemperatur und eine Kalibrierungsumgebungstemperatur aufgenommen, und zusätzlich durch ein von der Umgebungstemperatur unabhängige, also unverfälschte, Werte lieferndes Messinstrument auch die Kalibrierungsmediumstemperatur exakt gemessen. Durch Kenntnis von Kalibrierungsmischtemperatur, Kalibrierungsumgebungstemperatur und Kalibrierungsmediumstemperatur wird eine wie oben dargelegt definierte Näherungsformel hinterlegt.

In einer bevorzugten Ausführungsform der Erfindung wird die Kalibrierungsmediumstemperatur berührungslos und insbesondere mit Hilfe eines Infrarotthermometers unter thermischer Isolation zur Umgebung der das Medium umschließenden Oberfläche gemessen. Dadurch ist es insbesondere möglich, die Mediumstemperatur ohne Beeinflussung durch die Umgebungstemperatur zu erfassen. Weitere die Erfindung verbessernde Maßnahmen werden nachstehend gemeinsam mit der Beschreibung von bevorzugten Ausführungsbeispielen der Erfindung anhand der Figuren näher dargestellt. Es zeigen
- Figur 1: das Schema einer Temperaturbestimmungseinrichtung,
- Figur 2: das Schema eines erfindungsgemäßen Verfahrens zur Kalibrierung und zum Betrieb einer Temperaturbestimmungseinrichtung, und
- Figur 3: eine grafische Repräsentation von gemessenen Temperaturen und einer errechneten Temperatur.

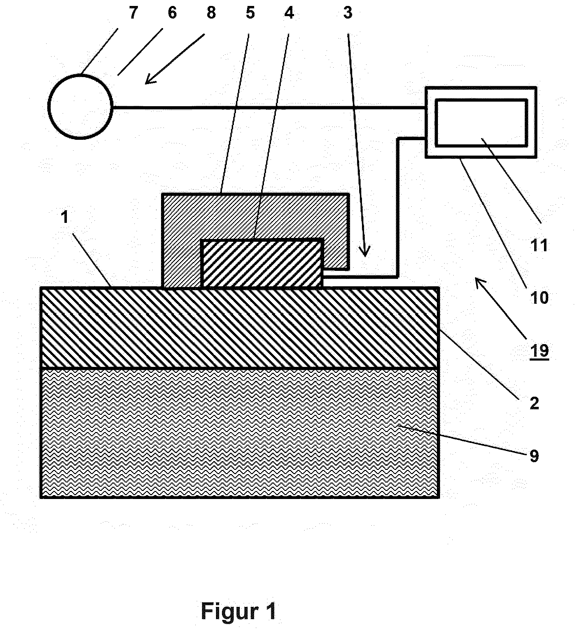

Gemäß Figur 1 umfasst eine Temperaturbestimmungseinrichtung **19** einen auf der Oberfläche **1** eines Rohres **2** angebrachten, eine Mischtemperatur **3** aufweisenden, Oberflächentemperatursensor **4,** der von einem Gehäuse **5** umgeben ist. Das Gehäuse **5** wiederum ist von der Luft in seiner Umgebung **6** umgeben. In der Nähe des Gehäuses **5** ist ein Umgebungstemperatursensor **7** angeordnet, der die Umgebungstemperatur **8** der dort angeordneten Luft misst. Die Mediumstemperatur **9** und die Temperatur der Oberfläche **1** ist höher als die Umgebungstemperatur **8** der umgebenden Luft. Dadurch ergibt sich eine Mischtemperatur **3** des im Gehäuse **5** angeordneten Oberflächentemperatursensors **4,** die zwischen der Mediumstemperatur **9** und der Umgebungstemperatur **8** liegt.

Eine Recheneinheit **10** ist mit dem Oberflächentemperatursensor **4** und dem Umgebungstemperatursensor **7** verbunden und errechnet eine Mediumstemperaturnäherung **11** die linear abhängig ist von der Differenz von der Umgebungstemperatur **8** und der gemessenen Mischtemperatur **3.** Der Proportionalitätsfaktor ist dabei abhängig von Kalibrierungswerten, die zuvor beispielsweise durch Kalibrierung **12** oder durch nummerische Simulation definiert worden sind.

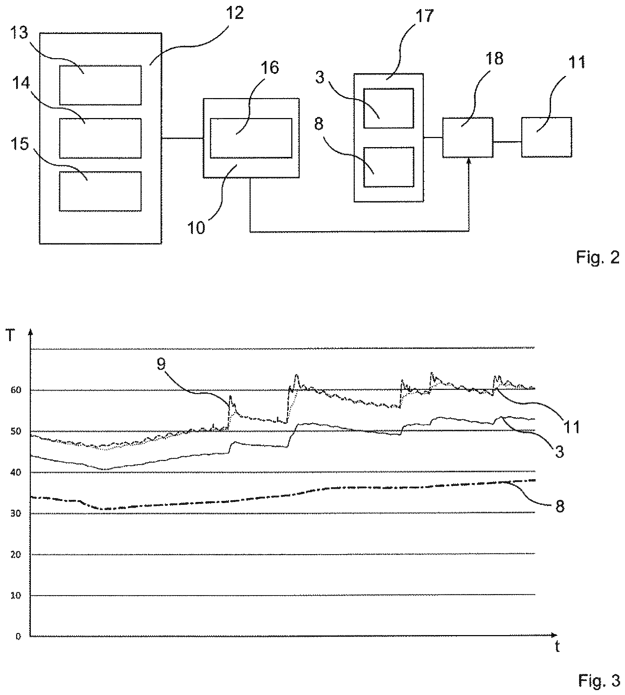

Gemäß Figur 2 wird einmalig die Kalibrierung **12** einer Temperaturbestimmungseinrichtung durchgeführt, indem eine Kalibrierungsmediumstemperatur **13** durch ein nicht dargestelltes Infrarotthermometer, eine Kalibrierungsumgebungstemperatur **14** durch einen Umgebungstemperatursensor 7 und eine Kalibrierungsmischtemperatur **15** durch einen Mediumstemperatursensor **4** aufgenommen wird, und in einer Recheneinheit **10** elektronisch hinterlegt wird, und zur Definition einer Näherungsformel **16** verwendet wird.

Im Anschluss wird in Schritten, die beliebig oft wiederholt werden können, in einem Messschritt **17** eine Umgebungstemperatur **8** und eine Mischtemperatur **3** gemessen und in einem zweiten Schritt **18** durch eine Recheneinheit **10** unter Verwendung der Näherungsformel **16** eine Mediumstemperaturnäherung **11** errechnet. Es wird im Vergleich zur Kalibrierung **12** also eine Messung und somit ein Messinstrument weniger benötigt.

Figur 3 zeigt in einem Koordinatensystem, das die Temperatur T in Grad Celsius über der Zeit t aufträgt, eine graphische Repräsentation von einer gemessenen Umgebungstemperatur **8** (gestrichelt-gepunktete Linie), einer gemessenen Mischtemperatur **3** (durchgezogene Linie), einer mit dem erfindungsgemäßen Verfahren errechneten Mediumstemperaturnäherung **11** (gepunktete Linie) und der tatsächlich vorhandenen Mediumstemperatur **9** (gestrichelte Linie). Zu erkennen ist vor allem zum einen der Einfluss der Umgebungstemperatur **8** auf die Mischtemperatur **3** und die sehr genaue Kompensation dieses Einflusses durch das beschriebene Verfahren. Erkennbar ist dies vor allem daran, dass die Mediumstemperatur 9 und die Mediumstemperaturnäherung **11** nahezu deckungsgleich aufeinanderliegen. Abweichungen betreffen vor allem hochfrequente Oszillationen, die beispielsweise durch die Trägheit des Oberflächentemperatursensors **4,** des Umgebungstemperatursensors 7 oder durch die Wärmekapazität des Oberflächensensors **4** oder seines Gehäuses **5** erklärbar sind.

Alternative Ausführungsformen der Erfindung sehen vor, dass mehr als ein Oberflächentemperatursensor oder mehr als ein Umgebungstemperatursensor vorgesehen sind. Die beanspruchte Erfindung sieht vor, dass der Oberflächensensor nicht von einem Gehäuse umgeben ist.

### Bezugszeichenliste

- 1: Oberfläche
- 2: Rohr
- 3: Mischtemperatur (TM)
- 4: Oberflächentemperatursensor
- 5: Gehäuse
- 6: Umgebung
- 7: Umgebungstemperatursensor
- 8: Umgebungstemperatur (TU)
- 9: Mediumstemperatur (TMED)
- 10: Recheneinheit
- 11: Mediumstemperaturnäherung (TMEDN)
- 12: Kalibrierung
- 13: Kalibrierungsmediumstemperatur (TMEDKAL)
- 14: Kalibrierungsumgebungstemperatur (TUKAL)
- 15: Kalibrierungsmischtemperatur (TMKAL)
- 16: Näherungsformel
- 17: Messschritt
- 18: zweiter Schritt
- 19: Temperaturbestimmungseinrichtung

## Patentansprüche

1. Temperaturbestimmungseinrichtung (19) zur Bestimmung einer Mediumstemperatur (9) (TMED) über die Temperatur einer das Medium umgebenden Oberfläche (1), umfassend einen in der Umgebung (6) der Oberfläche (1) angeordneten Umgebungstemperatursensor (7), zur Messung einer Umgebungstemperatur (8) (TU), und einen auf der Oberfläche (1) aufliegenden Oberflächentemperatursensor (4), zur Messung einer zwischen der Mediumstemperatur (9) (TMED) und der Umgebungstemperatur (8) (TU) liegenden Mischtemperatur (3) (TM), wobei die Mischtemperatur (3) (TM), die der Oberflächentemperatursensor (4) misst und liefert, der durch die Umgebungstemperatur (8) (TU) verfälschten Mediumstemperatur (9) (TMED) entspricht, weiterhin umfassend eine Recheneinheit (10) mit darauf elektronisch hinterlegter Näherungsformel (16) zur Errechnung einer Mediumstemperaturnäherung (11) (TMEDN), wobei die Näherungsformel (16) als Summe aus der Mischtemperatur (3) (TM) und einem Produkt aus zwei Faktoren, der erste Faktor sich aus der Differenz von der Mischtemperatur (3) (TM) und der Umgebungstemperatur (8) (TU) ergebend und der zweite Faktor sich aus einem Verhältnis eines Dividenden zu einem Quotienten ergebend, dabei der Dividend sich aus der Differenz von einer Kalibrierungsmediumstemperatur (13) (TMEDKAL) und einer Kalibrierungsmischtemperatur (15) (TMKAL) ergebend und der Divisor sich aus der Differenz von der Kalibrierungsmischtemperatur (15) (TMKAL) und einer Kalibrierungsumgebungstemperatur (14) (TUKAL) ergebend, hinterlegt ist, wobei die Näherungsformel (16) als TMEDN = TM + (TM - TU) * ((TMEDKAL - TMKAL) / (TMKAL - TUKAL)) hinterlegt ist, **gekennzeichnet dadurch, dass** der Oberflächentemperatursensor (4) nicht von einem Gehäuse (5) umgeben ist, so dass der Einfluss der Umgebungstemperatur (8) (TU) auf die Mischtemperatur (3) (TM) des Oberflächentemperatursensors (4) nicht durch die Wärmekapazität eines solchen Gehäuses (5) vermittelt wird.

2. Verfahren zum Betrieb einer Temperaturbestimmungseinrichtung (19) gemäß Anspruch 1, umfassend Verfahrensschritte, bei denen eine Umgebungstemperatur (8) (TU) in der Umgebung (6) der Oberfläche (1) gemessen wird, und eine zwischen der Mediumstemperatur (9) (TMED) und der Umgebungstemperatur (8) (TU) liegende Mischtemperatur (3) (TM) gemessen wird, wobei die Mischtemperatur (3) (TM), die der Oberflächentemperatursensor (4) misst und liefert, der durch die Umgebungstemperatur (8) (TU) verfälschten Mediumstemperatur (9) (TMED) entspricht, wonach durch eine Recheneinheit (10) eine Mediumstemperaturnäherung (11) (TMEDN) als Summe aus der Mischtemperatur (3) (TM) und einem Produkt aus zwei Faktoren, der erste Faktor sich aus der Differenz von der Mischtemperatur (3) (TM) und der Umgebungstemperatur (8) (TU) ergebend und der zweite Faktor sich aus einem Verhältnis eines Dividenden zu einem Quotienten ergebend, dabei der Dividend sich aus der Differenz von einer Kalibrierungsmediumstemperatur (13) (TMEDKAL) und einer Kalibrierungsmischtemperatur (15) (TMKAL) ergebend und der Divisor sich aus der Differenz von der Kalibrierungsmischtemperatur (15) (TMKAL) und einer Kalibrierungsumgebungstemperatur (14) (TUKAL) ergebend, errechnet wird, wobei die Mediumstemperaturnäherung (11) (TMEDN) als TMEDN = TM + (TM - TU) * ((TMEDKAL - TMKAL) / (TMKAL - TUKAL)) errechnet wird.

3. Verfahren zur Kalibrierung (12) einer Temperaturbestimmungseinrichtung (19) gemäß Anspruch 1, umfassend Verfahrensschritte, bei denen eine Kalibrierungsumgebungstemperatur (14) (TUKAL) in der Umgebung (6) einer Oberfläche (1) gemessen wird, und eine Kalibrierungsmediumstemperatur (13) (TMDEKAL) des Mediums (9) gemessen und/oder aus mindestens einer anderen, bekannten Prozessgröße berechnet und/oder aus bekannten Materialeigenschaften berechnet wird, wobei eine zwischen der Kalibrierungsmediumstemperatur (13) (TMEDKAL) und der Kalibrierungsumgebungstemperatur (14) (TUKAL) liegende Kalibrierungsmischtemperatur (15) (TMKAL) eines Oberflächentemperatursensors (4) gemessen wird, und eine Näherungsformel (16) zur Errechnung einer Mediumstemperaturnäherung (11) (TMEDN) als Summe aus einer Mischtemperatur (3) (TM) und einem Produkt aus zwei Faktoren, der erste Faktor sich aus der Differenz von der Mischtemperatur (3) (TM) und einer Umgebungstemperatur (8) (TU) ergebend und der zweite Faktor sich aus einem Verhältnis eines Dividenden zu einem Quotienten ergebend, dabei der Dividend sich aus der Differenz von der Kalibrierungsmediumstemperatur (13) (TMEDKAL) und der Kalibrierungsmischtemperatur (15) (TMKAL) ergebend und der Divisor sich aus der Differenz von der Kalibrierungsmischtemperatur (15) (TMKAL) und der Kalibrierungsumgebungstemperatur (14) (TUKAL) ergebend, hinterlegt wird, wobei die Näherungsformel (16) als TMEDN = TM + (TM - TU) * ((TMEDKAL - TMKAL) / (TMKAL - TUKAL)) hinterlegt wird, wobei die Mischtemperatur (3) (TM), die der Oberflächentemperatursensor (4) im Betrieb der Temperaturbestimmungseinrichtung (19) misst und liefert, der durch die Umgebungstemperatur (8) (TU) verfälschten Mediumstemperatur (9) (TMED) entspricht.

4. Verfahren nach Anspruch 3,
wobei die Kalibrierungsmediumstemperatur (13) (TMEDKAL) berührungslos gemessen wird.

5. Verfahren nach Anspruch 4,
wobei die Kalibrierungsmediumstemperatur (13) (TMEDKAL) durch ein Infrarotthermometer gemessen wird.

## Claims

1. A temperature determining device (19) for determining a medium temperature (9) (TMED) via the temperature of a surface (1) surrounding the medium, comprising an environment temperature sensor (7) disposed in the environment (6) of the surface (1) for measuring an environment temperature (8) (TU), and a surface temperature sensor (4) resting on the surface (1) for measuring a mixed temperature (3) (TM) that lies between the medium temperature (9) (TMED) and the environment temperature (8) (TU), wherein the mixed temperature (3) (TM) that is measured and delivered by the surface temperature sensor (4) corresponds to the medium temperature (9) (TMED) as confounded by the environment temperature (8) (TU), further comprising a calculation unit (10) with an approximation formula (16) electronically stored thereon for calculating a medium temperature approximation (11) (TMEDN), wherein the approximation formula (16) is stored as a sum of the mixed temperature (3) (TM) and a product of two factors, the first factor resulting from a difference of the mixed temperature (3) (TM) and the environment temperature (8) (TU), the second factor resulting from the ratio of a dividend to a quotient, herein the dividend resulting from the difference of a calibration medium temperature (13) (TMEDKAL) and a calibration mixed temperature (15) (TMKAL), the divisor resulting from a difference of the calibration mixed temperature (15) (TMKAL) and a calibration environment temperature (14) (TUKAL), wherein the approximation formula (16) is stored as TMEDN = TM + (TM - TU) * ((TMEDKAL - TMKAL) / (TMKAL - TUKAL)), **characterized in that** the surface temperature sensor (4) is not surrounded by a housing (5), so that the impact of the environment temperature (8) (TU) on the mixed temperature (3) (TM) of the surface temperature sensor (4) is not mediated via the thermal capacity of such a housing (5).

2. A method for operating a temperature determining device (19) according to claim 1, comprising method steps that involve measuring an environment temperature (8) (TU) in the environment (6) of the surface (1), and measuring a mixed temperature (3) (TM) that lies between the medium temperature (9) (TMED) and the environment temperature (8) (TU), wherein the mixed temperature (3) (TM) that the surface temperature sensor (4) measures and delivers corresponds to the medium temperature (9) (TMED) as confounded by the environment temperature (8) (TU), wherein a calculation unit (10) calculates a medium temperature approximation (11) (TMEDN) as a sum of the mixed temperature (3) (TM) and a product of two factors, the first factor resulting from the difference of the mixed temperature (3) (TM) and the environment temperature (8) (TU) and the second factor resulting from the ratio of a dividend and a quotient, herein the dividend resulting from a difference of a calibration medium temperature (13) (TMEDKAL) and a calibration mixed temperature (15) (TMKAL), and the divisor resulting from a difference of the calibration mixed temperature (15) (TMKAL) and a calibration environment temperature (14) (TUKAL), wherein the medium temperature approximation (11) (TMEDN) is calculated as TMEDN = TM + (TM - TU) * ((TMEDKAL - TMKAL) / (TMKAL - TUKAL)).

3. A method for calibrating (12) a temperature determining device (19) according to claim 1, comprising method steps that involve measuring a calibration environment temperature (14) (TUKAL) in the environment (6) of a surface (1), and measuring, and/or calculating, from at least one other known process quantity and/or from known material properties, a calibration medium temperature (13) (TMDEKAL) of the medium (9), wherein a calibration mixed temperature (15) (TMKAL) of a surface temperature sensor that lies between the calibration medium temperature (13) (TMEDKAL) and the calibration environment temperature (14) (TUKAL) is measured, and an approximation formula (16) for calculating a medium temperature approximation (11) (TMEDN) is stored as a sum of a mixed temperature (3) (TM) and a product of two factors, the first factor resulting from a difference of the mixed temperature (3) (TM) and an environment temperature (8) (TU), the second factor resulting from the ratio of a dividend to a quotient, herein the dividend resulting from the difference of the calibration medium temperature (13) (TMEDKAL) and the calibration mixed temperature (15) (TMKAL), and the divisor resulting from a difference of the calibration mixed temperature (15) (TMKAL) and the calibration environment temperature (14) (TUKAL), wherein the approximation formula (16) is stored as TMEDN = TM + (TM - TU) * ((TMEDKAL - TMKAL) / (TMKAL - TUKAL)), wherein the mixed temperature (3) (TM) that the surface temperature sensor (4) measures and delivers during operation of the temperature determining device (19) corresponds to the medium temperature (9) (TMED) as confounded by the environment temperature (8) (TU).

4. The method of claim 3,
wherein the calibration medium temperature (13) (TMEDKAL) is measured contactless.

5. The method of claim 4,
wherein the calibration medium temperature (13) (TMEDKAL) is measured via an infrared thermometer.

## Revendications

1. Dispositif de détermination de température (19) destiné à déterminer une température de milieu (9) (TMED) par le biais de la température d'une surface (1) entourant le milieu, ledit dispositif comprenant un capteur de température ambiante (7), disposé dans l'environnement (6) de la surface (1) et destiné à mesurer une température ambiante (8) (TU), et un capteur de température de surface (4) placé sur la surface (1) et destiné à mesurer une température mixte (3) (TM) située entre la température de milieu (9) (TMED) et la température ambiante (8) (TU), la température mixte (3) (TM), que mesure et fournit le capteur de température de surface (4), correspondant à la température de milieu (9) (TMED) faussée par la température ambiante (8) (TU), ledit dispositif comprenant en outre une unité de calcul (10) dans laquelle une formule d'approximation (16) est mémorisée par des moyens électroniques et qui est destinée à calculer une approximation de température de milieu (11) (TMEDN), la formule d'approximation (16) étant mémorisée sous la forme d'une somme de la température mixte (3) (TM) et d'un produit de deux facteurs, le premier facteur étant obtenu à partir de la différence entre la température mixte (3) (TM) et la température ambiante (8) (TU) et le deuxième facteur étant obtenu à partir d'un rapport d'un dividende à un quotient, le dividende étant obtenu à partir de la différence entre une température de milieu d'étalonnage (13) (TMEDKAL) et une température mixte d'étalonnage (15) (TMKAL) et le diviseur étant obtenu à partir de la différence entre la température mixte d'étalonnage (15) (TMKAL) et une température ambiante d'étalonnage (14) (TUKAL), la formule d'approximation (16) étant mémorisée sous la forme TMEDN=TM+(TM-TU)*((TMEDKAL-TMKAL)/(TMKAL-TUKAL)), **caractérisé en ce que** le capteur de température de surface (4) n'est pas entouré d'un boîtier (5) de sorte que la capacité calorifique d'un tel boîtier (5) ne permet pas à la température ambiante (8) (TU) d'influer sur la température mixte (3) (TM) du capteur de température de surface (4).

2. Procédé de fonctionnement d'un dispositif de détermination de température (19) selon la revendication 1, ledit procédé comprenant les étapes suivantes dans lesquelles une température ambiante (8) (TU) est mesurée dans l'environnement (6) de la surface (1) est mesurée et une température mixte (3) (TM), une température mixte (3) (TM) étant mesurée entre la température de milieu (9) (TMED) et la température ambiante (8) (TU), que mesure et fournit le capteur de température de surface (4), correspondant à la température de milieu (9) (TMED) faussée par la température ambiante (8) (TU), puis une approximation de température de milieu (11) (TMEDN) étant calculée par une unité de calcul (10) sous la forme d'une somme de la température mixte (3) (TM) et d'un produit de deux facteurs, le premier facteur étant obtenu à partir de la différence entre la température mixte (3) (TM) et la température ambiante (8) (TU) et le deuxième facteur étant obtenu à partir d'un rapport d'un dividende à un quotient, le dividende étant obtenu à partir de la différence entre une température de milieu d'étalonnage (13) (TMEDKAL) et une température mixte d'étalonnage (15) (TMKAL) et le diviseur étant obtenu à partir de la différence entre la température mixte d'étalonnage (15) (TMKAL) et une température ambiante d'étalonnage (14) (TUKAL), l'approximation de température de milieu (11) (TMEDN) étant calculée sous la forme TMEDN=TM+(TM-TU)*((TMEDKAL-TMKAL)/(TMKAL-TUKAL)).

3. Procédé d'étalonnage (12) d'un dispositif de détermination de température (19) selon la revendication 1, ledit procédé comprenant les étapes suivantes dans lesquelles une température ambiante d'étalonnage (14) (TUKAL) est mesurée dans l'environnement (6) d'une surface (1), et une température de milieu d'étalonnage (13) (TMDEKAL) du milieu (9) est mesurée et/ou calculée à partir d'au moins une autre grandeur de processus connue et/ou calculée à partir de propriétés de matériau connues, une température mixte d'étalonnage (15) (TMKAL) d'un capteur de température de surface (4), qui est située entre la température de milieu d'étalonnage (13) (TMEDKAL) et la température ambiante d'étalonnage (14) (TUKAL), est mesurée, et une formule d'approximation (16) destinée à calculer une approximation de température de milieu (11) (TMEDN) étant mémorisée sous la forme d'une somme d'une température mixte (3) (TM) et d'un produit de deux facteurs, le premier facteur étant obtenu à partir de la différence entre la température mixte (3) (TM) et une température ambiante (8) (TU) et le deuxième facteur étant obtenu à partir d'un rapport d'un dividende à un quotient, le dividende étant obtenu à partir de la différence entre la température de milieu d'étalonnage (13) (TMEDKAL) et la température mixte d'étalonnage (15) (TMKAL) et le diviseur étant obtenu à partir de la différence entre la température mixte d'étalonnage (15) (TMKAL) et la température ambiante d'étalonnage (14) (TUKAL), la formule d'approximation (16) étant mémorisée sous la forme TMEDN=TM+(TM-TU)*((TMEDKALTMKAL)/(TMKAL-TUKAL)), la température mixte (3) (TM), que mesure et fournit le capteur de température de surface (4) pendant le fonctionnement du dispositif de détermination de température (19), correspondant à la température de milieu (9) (TMED) faussée par la température ambiante (8) (TU).

4. Procédé selon la revendication 3, la température de milieu d'étalonnage (13) (TMEDKAL) étant mesurée sans contact.

5. Procédé selon la revendication 4, la température de milieu d'étalonnage (13) (TMEDKAL) étant mesurée par un thermomètre infrarouge.
